# EUROPEAN PATENT APPLICATION

(11) **EP 4 524 951 A2**
(43) Date of publication of application: **19.03.2025**
(21) Application number: 23803939.0
(22) Date of filing: 08.05.2023
(51) Int. Cl.: G10H 1/00, G06F 16/683

(54) **SONG GENERATION METHOD, APPARATUS AND SYSTEM, AND STORAGE MEDIUM**

(30) Priority: 07.05.2022 CN 202210494217
(71) Applicant: Lemon Inc., Grand Cayman, KY1-1205 (KY)
(72) Inventor: ZHANG, Yilin, Los Angeles, California 90066 (US); LI, Bochen, Los Angeles, California 90066 (US); THIO, Vibert, Los Angeles, California 90066 (US); LIU, Shizhu, Los Angeles, California 90066 (US); CHEN, Jitong, Los Angeles, California 90066 (US); LI, Naihan, Beijing 100028 (CN); WANG, Yuping, Beijing 100028 (CN)
(74) Representative: Dentons UK and Middle East LLP
(86) International application number: PCT/SG2023/050316
(87) International publication number: WO 2023/219565

(57) **Abstract**

The present disclosure relates to a song generation method, apparatus and system, and a storage medium. The method comprises: acquiring target lyric text input by a user; aligning the target lyric text with a singing melody of an initial song, and determining a correspondence between text units in the target lyric text and notes in the singing melody; performing speech synthesis on the target lyric text on the basis of the correspondence between the text units in the target lyric text and the notes in the singing melody, so as to obtain singing speech in which the target lyric text is sung with the singing melody; and then, combining the singing speech and accompaniment audio of the initial song, so as to generate a target song. Substantively, a user is allowed to write lyrics by himself/herself, and perform song creation on the basis of the lyrics written by the user himself/herself, a singing melody and accompaniment audio, thereby forming a complete and new song. In this way, even if a user does not have professional skills in music creation, the user can generate a song on the basis of lyrics written by the user, such that the efficiency and interest of creating a song by the user are improved.

## Description

### CROSS-REFERENCE TO RELATED APPLICATIONS

The present application is based on the Chinese Patent Application with an application number of 202210494217.7, filed on May 07, 2022, and entitled "Song Generation Method, Apparatus, System and Storage Medium", and claims its priority. The disclosure of the Chinese Patent application as a whole is incorporated into the present application herein by reference.

### TECHNICAL FIELD

The present disclosure relates to the technical field of artificial intelligence, and in particular, to a song generation method, an apparatus, a system, and a storage medium.

### BACKGROUND

Song creation requires certain professional skills, which is very difficult for ordinary users lacking professional skills. And therefore, how to help creators to efficiently create songs is a problem to be solved urgently at present.

### SUMMARY

In order to solve the technical problem, the present disclosure provides a song generation method, an apparatus, a system, and a storage medium.

In a first aspect, the present disclosure provides a song generation method, comprising: acquiring a target lyric text input by a user; aligning the target lyric text with a singing melody of an initial song, to determine correspondence between text units in the target lyric text and notes in the singing melody, wherein the singing melody is a singing melody of initial lyrics in the initial song; performing voice synthesis on the target lyric text based on the correspondence between the text units in the target lyric text and the notes in the singing melody to obtain a singing voice singing the target lyric text with the singing melody; combining the singing voice with an accompaniment audio of the initial song to generate a target song.

In some embodiments, the method further comprising: before the aligning the target lyric text with the singing melody of an initial song selecting the initial song from a plurality of preset songs in response to a selection operation of the initial song; and determining a corresponding singing melody and accompaniment audio corresponding to the initial song.

In some embodiments, aligning the target lyric text with a singing melody of an initial song comprises: splitting the singing melody into a plurality of melody paragraphs; splitting the target lyric text into a plurality of lyric paragraphs, wherein a number of the plurality of lyric paragraphs is the same as that of the plurality of melody paragraphs; aligning the plurality of lyric paragraphs with the plurality of melody paragraphs one to one, to determine correspondence between text units in the plurality of lyric paragraphs and notes in corresponding melody paragraphs.

In some embodiments, splitting the singing melody into a plurality of melody paragraphs comprises: determining a paragraph segmentation point every preset number of bars in the singing melody; adjusting a number of paragraph segmentation points based on a number of notes in a melody paragraph corresponding to each segment segmentation point; and adjusting a position of each paragraph segmentation point based on a distance between the note heads, wherein the distance comprises a duration of a note head and/or a pitch interval of the note heads.

In some embodiments, adjusting a number of paragraph segmentation points based on a number of notes in a melody paragraph corresponding to each segment segmentation point comprises: for any one of the paragraph segmentation points, in case that a number of notes in a melody paragraph corresponding to the paragraph segmentation point is less than a first threshold, deleting the paragraph segmentation point; and in case that a number of notes in the melody paragraph corresponding to the paragraph segmentation point is greater than a second threshold, adding a paragraph segmentation point.

In some embodiments, adjusting the position of each paragraph segmentation point based on the distance comprises: for any one of the paragraph segmentation points, searching a position where the distance between the note heads meets a preset condition within a preset number of beats around the any one of the paragraph segmentation point, as a position of the paragraph segmentation point; wherein the preset condition is a duration of a note head before the paragraph segmentation point or a duration of a note head after the paragraph segmentation point is the largest, or durations of note heads before and after the paragraph segmentation point are equal and a pitch interval of the note heads before and after the paragraph segmentation point is the largest.

In some embodiments, splitting the target lyric text into a plurality of lyric paragraphs comprises: performing word segmentation on the target lyric text, and determining a part of speech corresponding to each word; and splitting the target lyric text into the plurality of lyric paragraphs based on the part of speech corresponding to each word, a predefined linguistic rule and a length of the singing melody.

In some embodiments, aligning the plurality of lyric paragraphs with the plurality of melody paragraphs one to one comprises: for each melody paragraph of the plurality of melody paragraphs, acquiring a plurality of predetermined lyric alignment templates with different numbers of lyric words and corresponding to the melody paragraph; selecting a target lyric alignment template from the plurality of lyric alignment templates, wherein a number of words corresponding to the target lyric alignment template is a number of words of a lyric paragraph corresponding to the melody paragraph; and aligning the lyric paragraph corresponding to the melody paragraph with the melody paragraph based on the target lyric alignment template.

In some embodiments, a plurality of lyric alignment templates corresponding to the melody paragraph comprise: a first lyric alignment template, a second lyric alignment template and a third lyric alignment template; in the first lyric alignment template, each note in the melody paragraph corresponds to a text unit; in the second lyric alignment template, adjacent notes with a closest distance between the note heads in the melody paragraph are combined into a note pair, wherein one note pair corresponds to one text unit; in the third lyric alignment template, adjacent notes with the closest distance between the note heads in the second lyric alignment template are combined into a note pair, wherein one note pair corresponds to one text unit.

In a second aspect, the present disclosure also provides a song generation apparatus, comprising: an acquisition unit configured to acquire a target lyric text input by a user; an alignment unit configured to align the target lyric text with a singing melody of an initial song to determine correspondence between text units in the target lyric text and notes in the singing melody, wherein the singing melody is a singing melody of initial lyrics in the initial song; a synthesis unit configured to perform voice synthesis on the target lyric text based on the correspondence between the text units in the target lyric text and the notes in the singing melody to obtain a singing voice singing the target lyric text with the singing melody; and a generation unit configured to combine the singing voice with an accompaniment audio of the initial song to generate a target song.

In a third aspect, the present disclosure also provides a system comprising at least one computing device and at least one storage device storing instructions, wherein the instructions, when executed by the at least one computing device, cause the at least one computing device to perform the steps of the song generation method as described above.

In a fourth aspect, the present disclosure also provides a computer-readable storage medium, wherein the computer-readable storage medium stores a program or instructions which, when executed by at least one computing device, cause the at least one computing device to perform the steps of the song generation method as described above.

### BRIEF DESCRIPTION OF THE DRAWINGS

The drawings, which are incorporated in and constitute a part of this description, illustrate embodiments consistent with the present disclosure and, and together with the description, serve to explain the principles of the present disclosure.

In order to more clearly illustrate the technical solutions in the embodiments of the present disclosure or the prior art, a brief introduction will be given below for the drawings required to be used in the description of the embodiments or the prior art. It is obvious that, for an ordinary skilled in the art, he or she may also acquire other drawings according to such drawings without paying inventive efforts.
FIG. 1 is a flow diagram of a song generation method provided by some embodiments of the present disclosure.
FIG. 2 is a flow diagram of another song generation method provided by some embodiments of the present disclosure.
FIG. 3 is a schematic diagram of a staff of a melody provided by some embodiments of the present disclosure.
FIG. 4 is a schematic diagram of a staff of a melody paragraph provided by some embodiments of the present disclosure.
FIG. 5 is a schematic diagram of a display interface for implementing generation of a song based on a target lyric text in a terminal provided by some embodiments of the present disclosure;
FIG. 6 is a schematic structural diagram of a song generation apparatus in some embodiments of the present disclosure.
FIG. 7 is an exemplary block diagram of a system comprising at least one computing device and at least one storage device storing instructions provided by some embodiments of the present disclosure.

### DETAILED DESCRIPTION

In order that the above objects, features and advantages of the present disclosure may be more clearly understood, the scheme of the present disclosure will be further described below. It is to be noted that, without conflict, the embodiments and the features in the embodiments of the present disclosure can be combined with each other.

In the following description, numerous specific details are set forth in order to provide a thorough understanding of the present disclosure, but the present disclosure may be practiced otherwise than as described herein; obviously, the embodiments disclosed in the specification are only a portion of the embodiments of the present disclosure, and not all embodiments.

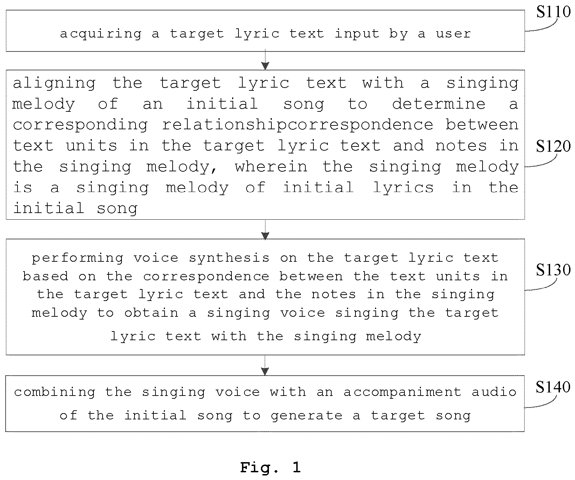

FIG. 1 is a flow diagram of a song generation method provided by some embodiments of the present disclosure. The present embodiments can be applied to the situation of song creation based on lyric texts in a client, and the song generation method can be executed by a song generation apparatus, which may be implemented in software and/or hardware. The apparatus can be configured in an electronic device, such as a terminal, specifically including but not limited to a smart phone, a palm computer, a tablet computer, a wearable device with a display screen, a desktop computer, a notebook computer, an all-in-one machine, a smart home device and the like. Alternatively, the present embodiments can be applied to the situation of song creation based on lyric texts in a server, and the song generation method may be executed by a song generation apparatus, which may be implemented in software and/or hardware, and may be configured in an electronic device, such as a server.

As shown in FIG. 1, the song generation method may specifically comprise steps S110 to S140.

S110, acquiring a target lyric text input by a user.

There are many ways to implement this step, and the present disclosure does not limit this. In some embodiments, a song generation interface is displayed in a display screen of the terminal in response to a trigger operation of song generation. The song generation interface comprises a text entry box. When a user requires to compose a song, the user inputs a target lyric text in the text input box, and the song generation system identifies the target lyric text input by the user so as to acquire the target lyric text.

S120, aligning the target lyric text with a singing melody of an initial song, to determine correspondence between text units in the target lyric text and notes in the singing melody; the singing melody being a singing melody of initial lyrics in the initial song.

The singing melody refers to a main melody of a song that the user requires to generate.

By means of the alignment, the correspondence between text units in the target lyric text and the notes in the singing melody can be determined. The text units may be a combination of one or more of words, phrases, sentences, pronunciation units, etc.

In some embodiments, prior to this step, the song generation method further comprises: selecting the initial song from a plurality of preset songs in response to a selection operation of the initial song; and determining the singing melody and accompaniment audio corresponding to the initial song. The essence of this setting is to set a song database comprises a plurality of songs in advance and allow the user to select a song preferred by the user from the song database as the initial song.

S130, performing voice synthesis on the target lyric text based on the correspondence between the text units in the target lyric text and the notes in the singing melody to obtain a singing voice singing the target lyric text with the singing melody.

The speech synthesis is Singing Voice Synthesis (SVS), which synthesizes singing according to lyrics and song melody. Compared with the Text To Speech (TTS) making the machine "speak", singing voice synthesis makes the machine sing, so it is more entertaining. A singing synthesis model can be generated through pre-training, so that only by inputting the tone, the custom text and the song melody into the singing synthesis model, an audio comprising the pronunciation corresponding to the custom text can be output by the singing synthesis model. The training of the singing synthesis model can follow the related art and will not be repeated here.

S140, combining the singing voice with an accompaniment audio of the initial song to generate a target song.

The accompaniment audio refers to the chord of a song that the user requires to generate, and plays a role in setting off the main melody.

In some embodiments, in practice, it can be set that the singing melody and the accompaniment audio are in one-to-one correspondence, that is, when the user selects the singing melody, the accompaniment audio is selected simultaneously due to the one-to-one correspondence between the two.

Alternatively, it can be set that the singing melody and the accompaniment audio are not in one-to-one correspondence, that is, the user requires to select the accompaniment audio after selecting the singing melody.

Combining refers to that the singing voice and the accompaniment audio are fused with each other to form a new song. The combining way is the related art and is not described herein.

The essence of the technical scheme is to allow users to write their own lyrics, and create songs based on the lyrics written by the users themselves, the singing melody and the accompaniment audio, to form a complete new song. Therefore, even if users do not have the professional skill of music creation, they can generate songs based on the lyrics written by the users themselves, which improves the efficiency and the interest of the user in creating songs.

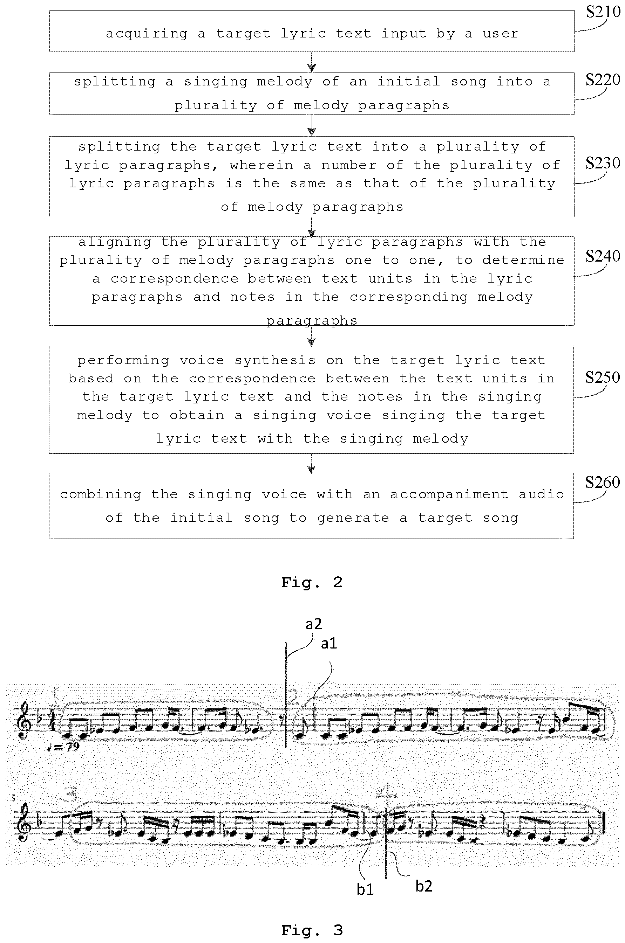

FIG. 2 is a flow diagram of another song generation method provided by some embodiments of the present disclosure. FIG. 2 is a specific example of FIG. 1. Referring to FIG. 2, the song generation method comprises steps as follows.

S210, acquiring a target lyric text input by a user.

S220, splitting a singing melody of an initial song into a plurality of melody paragraphs.

In some embodiments, in practice, the singing melody has been preprocessed or not.

If the singing melody has been preprocessed, the singing melody comprises a plurality of paragraph segmentation points, and the positions of the paragraph segmentation points in the singing melody are fixed. Based on the plurality of paragraph segmentation points, the singing melody can be split into a plurality of melody paragraphs.

If the singing melody has not been preprocessed, the singing melody does not comprise paragraph segmentation points, and in this case, the singing melody needs to be processed to enable the singing melody to have paragraph segmentation points with fixed positions, to split the singing melody into a plurality of melody paragraphs.

If the singing melody has not been preprocessed, there are many ways to implement this step, and the present disclosure does not limit this. In some embodiments, the paragraph segmentation points may be determined only by the bar of the singing melody, and then split, or the paragraph segmentation points may be determined only by the number of notes, and then split.

In some embodiments, the following provides a method of determining paragraph segmentation points, comprising: determining a paragraph segmentation point every preset number of bars in a singing melody; adjusting a number of paragraph segmentation points based on a number of notes in a melody paragraph corresponding to each paragraph segmentation point; adjusting a position of each paragraph segmentation point based on a distance between the note heads, wherein the distance between the note heads comprises a duration of a note head and/or a pitch interval of the note heads. The essence of this setting is that firstly, paragraph segmentation points are initially determined based on the number of bars, and then the paragraph segmentation points are adjusted based on the number of notes and the distance between the note heads to obtain the positions of the final paragraph segmentation points. This setting can reduce the difficulty of the subsequent alignment operation.

Adjusting a number of the paragraph segmentation points based on a number of notes in a melody paragraph corresponding to each paragraph segmentation point comprises: for any paragraph segmentation point of the paragraph segmentation points, in case that a number of notes in a melody paragraph corresponding to the paragraph segmentation point is less than a first threshold, deleting the paragraph segmentation point; in case that a number of notes in a melody paragraph corresponding to the paragraph segmentation point is greater than a second threshold, adding a paragraph segmentation point. This setting can make the number of notes in each melody paragraph tend to be consistent, which is beneficial to the matching of the subsequent lyrics and notes.

Adjusting the position of each paragraph segmentation point based on the distance comprises: for any one of the paragraph segmentation points, searching a position where the distance between the note heads meets a preset condition within a preset number of beats around the any one of the paragraph segmentation point, as a position of the paragraph segmentation point; and wherein the preset condition is a duration of a note head before the paragraph segmentation point or a duration of a note head after the paragraph segmentation point is the largest, or durations of note heads before and after the paragraph segmentation point are equal and a pitch interval of the note heads before and after the paragraph segmentation point is the largest.

FIG. 3 is a schematic diagram of a staff of a melody provided by some embodiments of the present disclosure. In some embodiments, there are two lines of melodies comprised in FIG. 3, with 4 bars in each line. First, a paragraph segmentation point is determined every 2 bars. The paragraph segmentation point determined for the first time in the first line is a1 in the figure, and the paragraph segmentation point determined for the first time in the second line is b1 in the figure. And then, the paragraph segmentation point determined for the first time is corrected and adjusted according to the number of notes and the distance between the note heads. After adjustment, the paragraph segmentation point finally determined in the first line is a2 in the figure, and the paragraph segmentation point finally determined in the second line is b2 in the figure. Finally, the first line of melody is divided into two melody paragraphs 1 and 2, and the second line of melody is divided into two melody paragraphs 3 and 4.

S230, splitting the target lyric text into a plurality of lyric paragraphs, wherein a number of the plurality of lyric paragraphs is the same as that of the plurality of melody paragraphs.

There are many ways to implement this step, and the present disclosure does not limit this. In some embodiments, word segmentation is performed on the target lyric text, and a part of speech corresponding to each word is determined; and the target lyric text is split into a plurality of lyric paragraphs based on the part of speech corresponding to each word, a predefined linguistic rule and a length of the singing melody.

The part of speech refers to the result of classifying words by taking grammatical features (including syntactic function and morphological change) as a main basis and taking into account lexical meaning. The part of speech comprises nouns, verbs, adjectives, pronouns, adverbs, auxiliary words and the like.

Linguistic rules are segmentation restriction rules based on semantic integrity. For example: the adverbs and verbs are inseparable; numerals and quantifiers are inseparable; pronouns and numerals are inseparable, and so on. Splitting the target lyric text into a plurality of lyric paragraphs based on the part of speech corresponding to each word and the predefined linguistic rule means that after splitting, the inseparable phrases are located in the same lyric paragraph.

Splitting the target lyric text into a plurality of lyric paragraphs based on the length of the singing melody means that after splitting, the number of words in each lyric paragraph is less than or equal to the number of notes in the melody paragraph corresponding to the lyric paragraph.

In practice, there are often a plurality of linguistic rules, and considering that the number of notes in a melody paragraph is limited in practice, a dynamic optimization strategy is set for this purpose, that is, to minimize the length difference of the lyric short sentences after splitting under the condition of satisfying as many linguistic rules as possible.

In some embodiments, the target lyric text entered by the user in Chinese Phonetic Alphabet is: " yu dao ni hou cai xue hui ai de zi you" (with a length of 11 characters in Chinese, "Just learn to love freely after meeting you" in English). Word segmentation is performed on the target lyric text to obtain phrases as follows: "yu dao, ni, hou, cai, xue hui, ai, de, zi you". And part of speech is tagged for each obtained phrase, wherein the result is as follows: "yu dao"-verb, "ni"-pronoun, "hou"-nouns of locality, "cai"-adverb, "xue hui"-verb, "ai"-verb, "de"-auxiliary word, "zi you"-adjective. Based on a dynamic optimization strategy, the target lyric text is finally split as follows.

"yu dao ni hou" (length: 4 characters).

"cai xue hui ai de zi you" (length: 7 characters).

The linguistic rule used in this splitting process is that adverbs and verbs are inseparable. After splitting, the length difference of the two lyric short sentences is 3 characters.

S240, aligning the plurality of lyric paragraphs with the plurality of melody paragraphs one to one, to determine correspondence between text units in the lyric paragraphs and notes in the corresponding melody paragraphs.

In some embodiments, the specific implementation mode of this step comprises the following.

First, correspondence between the lyric paragraphs and the melody paragraphs is established.

In some embodiments, in case that the target lyric text may be segmented into 8 lyric paragraphs and there are a total of 8 melody paragraphs, correspondence between the first lyric paragraph and the first melody paragraph, correspondence between the second lyric paragraph and the second melody paragraph, ......, and correspondence between the eighth lyric paragraph and the eighth melody paragraph are established.

Then, the text units in a lyric paragraph are corresponded to the notes in a melody paragraph having correspondence with the lyric paragraph.

There are various specific modes for implementing "corresponding the text units in a lyric paragraph to the notes in a melody paragraph having correspondence with the lyric paragraph", and the present disclosure does not limit this. In some embodiments, the nth word in a lyric text unit is aligned in sequence with the nth note in the melody paragraph.

Or, the implementation method of this step comprises: for each melody paragraph of the plurality of melody paragraphs, acquiring a plurality of predetermined lyric alignment templates with different numbers of lyric words and corresponding to the melody paragraph; selecting a target lyric alignment template from the plurality of lyric alignment templates, wherein a number of words corresponding to the target lyric alignment template is a number of words of a lyric paragraph corresponding to the melody paragraph; and aligning the lyric paragraph corresponding to the melody paragraph with the melody paragraph based on the target lyric alignment template.

In some embodiments, in case that a melody paragraph comprises 7 notes, 3 lyric alignment templates are set for the melody paragraph. The details are as follows.

The first template is xxxxxxx, which is suitable for a lyric paragraph containing 7 characters.

The second template is xxx-xxx, which is suitable for a lyric paragraph containing 6 characters.

The third template is xx-xxx, which is suitable for a lyric paragraph comprising 5 characters.

"x" indicates a note with corresponding lyrics and "-" indicates a note without corresponding lyrics.

Suppose that "cai xue hui ai de zi you" in the previous example corresponds to the melody paragraph. Since " cai xue hui ai de zi you" has 7 characters, the first template is selected as the target lyric alignment template. Then the first note in the melody paragraph is aligned with "cai" , the second note is aligned with "xue" , ······, and the seventh note is aligned with "you" .

If the lyric alignment template corresponding to a certain melody paragraph is not predetermined, in practice, a first lyric alignment template, a second lyric alignment template and a third lyric alignment template may be generated from the melody paragraph. In the first lyric alignment template, each note in the melody paragraph corresponds to a text unit (e.g., a character); the following steps are repeatedly executed until the number of text units (e.g. characters) that can be matched by the last obtained lyric alignment template is equal to a set threshold: based on the previous lyric alignment template, combining adjacent notes with a closest distance between the note heads in the melody paragraph into a note pair, taking the note pair as a new note, and only corresponding it to one character to obtain a new lyric alignment template. Wherein, the threshold is set to be a positive integer, and is greater than or equal to 1, and less than or equal to the total number of notes in the melody paragraph.

In some embodiments, assuming that a melody paragraph comprises 7 notes in total, the threshold is set to 4. Corresponding each note in the melody paragraph to a character, a first lyric alignment template is obtained, and the first lyric alignment template can match 7 characters. Adjacent notes with the closest distance in the melody paragraph are combined and then corresponded to one character to obtain a second lyric alignment template, wherein the second lyric alignment template can be matched with 6 characters; adjacent notes with the closest distance between the note heads in the second lyric alignment template are combined and then corresponded to one character to obtain a third lyric alignment template, wherein the third lyric alignment template can be matched with 5 characters; and adjacent notes with the closest distance between the note heads in the third lyric alignment template are combined and then corresponded to one character to obtain a fourth lyric alignment template, wherein the fourth lyric alignment template can be matched with 4 characters, which is equal to the set threshold, and no new lyric alignment template will be generated. Therefore, 4 lyric alignment templates are set for the melody paragraph.

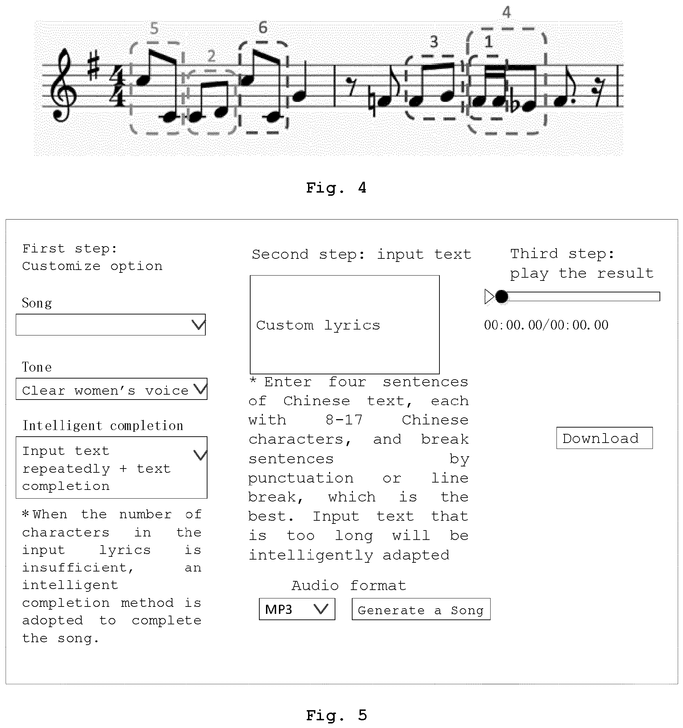

In some embodiments, FIG. 4 is a schematic diagram of a staff of a melody paragraph provided by some embodiments of the present disclosure. Referring to FIG. 4, in case that each note in the melody paragraph corresponds to a character, a first lyric alignment template is obtained. Because the distance between the note heads of the adjacent notes circled by a rounded corner frame 1 is closest, the two notes are combined and corresponded to one character, and a second lyric alignment template is obtained, at this time, the number of characters which can be matched with the second lyric alignment template is reduced by one compared with the number of characters which can be matched with the first lyric alignment template. After the adjacent notes circled by the round corner frame 1 are combined, the distance between the note heads of the adjacent notes circled by a round corner frame 2 is closest, the two notes are combined and corresponded to one character, and a third lyric alignment template is obtained, at this time, the number of characters which can be matched with the third lyric alignment template is reduced by one compared with the number of characters which can be matched with the second lyric alignment template. After the adjacent notes circled by the round corner frame 2 are combined, the distance between the note heads of the adjacent notes circled by a round corner frame 3 is closest, the two notes are combined and corresponded to one character, and a fourth lyric alignment template is obtained, at this time, the number of characters which can be matched with the fourth lyric alignment template is reduced by one compared with the number of characters which can be matched with the third lyric alignment template. Repeat the steps, a plurality of lyric alignment templates are obtained. The first 6 combined note pairs are labeled according to some embodiments in FIG. 4.

In some embodiments, when performing "based on the previous lyric alignment template, combining adjacent notes with a closest distance between the note heads in the melody paragraph into a note pair, taking the note pair as a new note, and only corresponding it to one character to obtain a new lyric alignment template", in case that there are multiple groups of adjacent notes in the melody paragraph, and the multiple groups of adjacent notes satisfy the condition that the distance between the note heads are the same and distance between the note heads are the closest, then the first beat, the third beat and the first half beat of each note in a bar are combined.

S250, performing voice synthesis on the target lyric text based on the correspondence between the text units in the target lyric text and the notes in the singing melody to obtain a singing voice singing the target lyric text with the singing melody.

S260, combining the singing voice with an accompaniment audio of the initial song to generate a target song.

The technical scheme provides a method for aligning a target lyric text with a singing melody in more detail, which can reduce the difficulty of aligning the target lyric text with the singing melody, is favorable for realizing the purpose of generating a song based on the target lyric text, and improves the efficiency and interest of users in creating songs.

FIG. 5 is a schematic diagram of a display interface for implementing generation of a song based on a target lyric text in a terminal provided by some embodiments of the present disclosure. Referring to FIG. 5, the display interface divides the generation of songs into three steps. The first step is to customize the option section, the second step is to enter the text section, and the third step is to play the result section.

In the first step, the user may configure a song configuration item, a tone configuration item, and an intelligent completion configuration item. These three configuration items are all set as drop down lists.

After the user triggers the song configuration item, a plurality of songs may be displayed in a drop down list, so that the user can select a song. And each song is preset to uniquely correspond to one melody and one accompaniment.

After the user triggers the tone configuration item, a plurality of tones, such as men's tone, women's tone and children's tone, and the like, can be displayed through the drop down list, so that the user can select one tone.

After the user triggers the intelligent completion configuration item, a plurality of intelligent completion modes can be displayed through the drop down list. Intelligent completion may be understood as adjusting and setting the custom text input by the user to make it adapt the selected melody. For example, the custom text input by the user can be divided into 5 lyric short sentences at most, but the target melody comprises 6 melody paragraphs, then the custom text input by the user is intelligently completed, for example, with "la la la" to form a new lyric short sentence, and finally the custom lyrics input by the user are changed into lyrics comprising 6 lyric short sentences. Or after the custom text input by the user is divided, a certain lyric short sentence comprises 5 characters, but the least number of characters matched with the lyric alignment template corresponding to the target melody is 7, and in case that the lyric alignment template is used, the sentence is completed by "la la", so that the number of words in the lyric short sentence is consistent with the number of words that can be matched with the lyric alignment template. In order to facilitate the user to quickly know the meaning of the intelligent completion configuration item, an explanation can be set below the intelligent completion configuration item. In some embodiments, the explanation is: when the number of characters of the input lyrics is insufficient, an intelligent completion method is adopted to complete the song.

In the second step, in order to facilitate the user to quickly understand the way in which the lyrics are written, a suggestion is added below the lyric input box: "Enter four sentences of Chinese text, each with 8-17 Chinese characters, and break sentences by punctuation or line break, which is the best. Input text that is too long will be intelligently adapted." The suggested content may be modified as desired. In addition, the user may configure the audio format of the generated song. When the configuration selections in the first step and the second step are all set, the user triggers a "Generate a Song" control in the second step, and the lyrics of the generated song can be displayed in the lyric input box. At this time, the lyrics are lyrics divided into lyric short sentences.

In a third step, the user can listen to the generated song by clicking on a play control of the music player. The user may download the generated song by clicking on a download control.

It should be noted that, for simplicity of description, the above method embodiments are described as a combination of a series of actions, but it shall be known to those skilled in the art that the present disclosure is not limited by the sequence of the actions as described, since according to the present disclosure, certain steps may be performed in other sequences or concurrently. Secondly, it shall also be known to those skilled in the art that the embodiments described in the description are preferred embodiments, and the actions and modules involved therein may not be essential to the present disclosure.

According to the technical scheme provided by the embodiments of the present disclosure, by acquiring a target lyric text input by a user, the target lyric text is aligned with a singing melody of an initial song, and correspondence between text units in the target lyric text and notes in the singing melody is determined; therefore, based on the correspondence between the text units in the target lyric text and the notes in the singing melody, voice synthesis is performed on the target lyric text to acquire a singing voice singing the target lyric text with the singing melody; and then, the singing voice is combined with an accompaniment audio of the initial song to generate a target song. The essence is to allow users to write their own lyrics, and create songs based on the lyrics written by the users themselves, the singing melody and the accompaniment audio, to form a complete new song. Therefore, even if users do not have the professional skill of music creation, they can generate songs based on the lyrics written by the users themselves, which improves the efficiency and the interest of the user in creating songs.

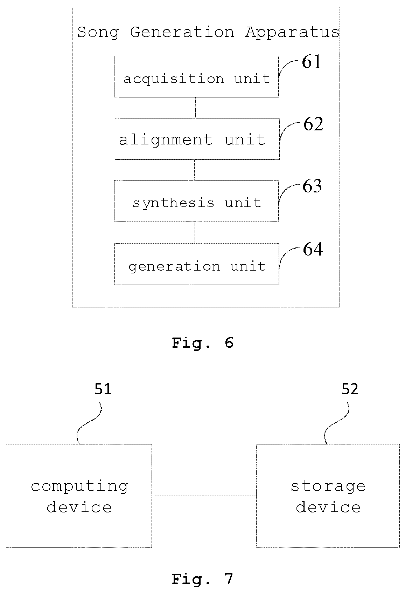

FIG. 6 is a schematic structural diagram of a song generation apparatus in some embodiments of the present disclosure. The song generation apparatus provided by the embodiments of the present disclosure can be configured in a client or can be configured in a server. Referring to FIG. 6, the song generation apparatus specifically comprises: an acquisition unit 61 configured to acquire a target lyric text input by a user; an alignment unit 62 configured to align the target lyric text with a singing melody of an initial song to determine correspondence between text units in the target lyric text and notes in the singing melody, wherein the singing melody is a singing melody of initial lyrics in the initial song; a synthesis unit 63 configured to perform voice synthesis on the target lyric text based on the correspondence between the text units in the target lyric text and the notes in the singing melody to obtain a singing voice singing the target lyric text with the singing melody. A generation unit 64 configured to combine the singing voice with an accompaniment audio of the initial song to generate a target song.

In some embodiments, the song generation apparatus further comprises: a selection unit and a determination unit; a selection unit configured to select an initial song from a plurality of preset songs in response to a selection operation of the initial song; and a determination unit configured to determine the corresponding singing melody and the accompaniment audio corresponding to the initial song.

In some embodiments, the alignment unit 62 is configured to: split the singing melody into a plurality of melody paragraphs; split the target lyric text into a plurality of lyric paragraphs, wherein a number of the plurality of lyric paragraphs is the same as that of the plurality of melody paragraphs; align the plurality of lyric paragraphs with the plurality of melody paragraphs one to one, to determine correspondence between text units in the lyric paragraphs and notes in the corresponding melody paragraphs.

In some embodiments, the alignment unit 62 splitting the singing melody into a plurality of melody paragraphs comprises: determining a paragraph segmentation point every preset number of bars in a singing melody; adjusting a number of paragraph segmentation points based on a number of notes in a melody paragraph corresponding to each paragraph segmentation point; adjusting a position of each paragraph segmentation point based on a distance between the note heads, wherein distance between the note heads comprises a duration of a note head and/or a pitch interval of the note heads.

In some embodiments, the alignment unit 62 adjusting a number of the paragraph segmentation points based on a number of notes in a melody paragraph corresponding to each paragraph segmentation point comprises: for any one of the paragraph segmentation points, in case that a number of notes in a melody paragraph corresponding to the paragraph segmentation point is less than a first threshold, deleting the any one of the paragraph segmentation points; and in case that a number of notes in the melody paragraph corresponding to the paragraph segmentation point is greater than a second threshold, adding a paragraph segmentation point.

In some embodiments, the alignment unit 62 adjusting the position of each paragraph segmentation point based on the distance comprises: for any one of the paragraph segmentation points, searching a position where the distance between the note heads meets a preset condition within a preset number of beats around the any one of the paragraph segmentation point, as a position of the paragraph segmentation point; and wherein the preset condition is a duration of a note head before the paragraph segmentation point or a duration of a note head after the paragraph segmentation point is the largest, or durations of note heads before and after the paragraph segmentation point are equal and a pitch interval of the note heads before and after the paragraph segmentation point is the largest.

In some embodiments, the alignment unit 62 splitting the target lyric text into a plurality of lyric paragraphs comprises: performing word segmentation on the target lyric text, and determining a part of speech corresponding to each word; splitting the target lyric text into a plurality of lyric paragraphs based on the part of speech corresponding to each word, a predefined linguistic rule and a length of the singing melody.

In some embodiments, the alignment unit 62 aligning the plurality of lyric paragraphs with the plurality of melody paragraphs one to one comprises: for each melody paragraph of the plurality of melody paragraphs, acquiring a plurality of predetermined lyric alignment templates with different numbers of lyric words and corresponding to the melody paragraph; selecting a target lyric alignment template from the plurality of lyric alignment templates, wherein a number of words corresponding to the target lyric alignment template is a number of words of a lyric paragraph corresponding to the melody paragraph; and aligning the lyric paragraph corresponding to the melody paragraph with the melody paragraph based on the target lyric alignment template.

In some embodiments, a plurality of lyric alignment templates corresponding to the melody paragraph comprise: a first lyric alignment template, a second lyric alignment template and a third lyric alignment template; in the first lyric alignment template, each note in the melody paragraph corresponds to a text unit; in the second lyric alignment template, adjacent notes with the closest distance between the note heads in the melody paragraph are combined into a note pair, wherein one note pair corresponds to one text unit; in the third lyric alignment template, adjacent notes with the closest distance between the note heads in the second lyric alignment template are combined into a note pair, wherein one note pair corresponds to one text unit.

The song generation apparatus provided in the embodiments of the present disclosure may perform steps executed by a client or a server in the song generation method provided in the embodiments of the present disclosure, and has execution steps and beneficial effects, which are not described herein again.

In some embodiments, the division of each unit in the song generation apparatus is only a logical function division, and there may be another division mode in actual implementation, for example, at least two units in the song generation apparatus may be implemented as one unit; each unit in the song generation apparatus may also be divided into a plurality of sub-units. It will be understood that the various units or sub-units may be implemented in electronic hardware, or a combination of computer software and electronic hardware. Whether these functions are implemented in hardware or software depends upon the particular application and design constraints imposed on the technical scheme. Those skilled in the art may implement the described functions for each particular application using different methods.

FIG. 7 is an exemplary block diagram of a system comprising at least one computing device and at least one storage device storing instructions provided by some embodiments of the present disclosure. In some embodiments, the system may be used for big data processing, and the at least one computing device and the at least one storage device may be deployed in a distributed manner, making the system a distributed data processing cluster.

As shown in FIG. 7, the system comprises: at least one computing device 51, and at least one storage device 52 storing instructions. It will be appreciated that the storage device 52 in the present embodiments may be either volatile memory or nonvolatile memory, or may comprise both volatile and nonvolatile memory.

In some embodiments, the storage device 52 stores the following elements, executable units or data structures, or a subset thereof, or an expanded set thereof: an operating system and an application program.

The operating system comprises various system programs, such as a framework layer, a core library layer, a driver layer, and the like, for implementing various basic tasks and processing hardware-based tasks. The application program, including various application programs such as a Media Player, a Browser, etc., is used to implement various application tasks. The program for implementing the song generation method provided by the embodiments of the present disclosure may be included in an application program.

In the embodiments of the present disclosure, the at least one computing device 51 is configured to execute the steps of the embodiments of the song generation method provided by the embodiments of the present disclosure by calling a program or an instruction stored in the at least one storage device 52, specifically, a program or an instruction stored in an application program.

The song generation method provided by the embodiments of the present disclosure may be applied to the computing device 51, or implemented by the computing device 51. The computing device 51 may be an integrated circuit chip having signal processing capabilities. In implementation, the steps of the above method may be performed by an integrated logic circuit of hardware or instructions in a software form in the computing device 51. The computing device 51 may be a general purpose processor, a Digital Signal Processor (DSP), an Application Specific Integrated Circuit (ASIC), a Field Programmable Gate Array (FPGA) or other programmable logic devices, discrete gate or transistor logic devices, and discrete hardware components. A general purpose processor may be a microprocessor or the processor may be any conventional processor or the like.

The steps of the song generation method provided by the embodiments of the present disclosure may be directly implemented by a hardware decoding processor, or implemented by a combination of hardware and software units in the decoding processor. The software units may be located in random access memory, flash memory, read-only memory, programmable read-only memory or electrically erasable programmable memory, registers and other mature storage media in this field. The storage medium is located in a storage device 52, and the computing device 51 reads the information in the storage device 52 and completes the steps of the method in combination with the hardware thereof.

The embodiments of the present disclosure also provide a computer-readable storage medium, wherein the computer-readable storage medium stores a program or instructions which, when executed by at least one computing device, cause the at least one computing device to perform the steps of the embodiments of the song generation method, which are not described herein again to avoid repeated description. The computing device may be the computing device 51 shown in FIG. 6. In some embodiments, the computer-readable storage medium is a non-transitory computer-readable storage medium.

The embodiments of the present disclosure further provide a computer program product, where the computer program product comprises a computer program, the computer program is stored in a non-transitory computer-readable storage medium, and at least one processor of the computer reads and executes the computer program from the storage medium, so that the computer executes steps of the embodiments of the song generation method, which are not described herein again to avoid repeated description.

The embodiments of the present disclosure further provide a computer program, comprising: instructions that, when executed by a processor, cause the processor to perform a song generation method according to any embodiment of the present disclosure.

It should be noted that, in this document, the term "comprising", "including" or any other variable intends to cover other nonexclusive containing relationships to ensure that a process, method, article or apparatus comprising a series of factors comprises not only those factors but also other factors not explicitly listed, or further comprises factors innate to the process, method, article or apparatus. Without more limitations, a factor defined with the sentence "comprising......" does not exclude the case that the process, method, article or apparatus comprising said factor still comprises other identical factors.

It will be understood by those skilled in the art that although some embodiments described herein include some but not other features included in other embodiments, combinations of features of different embodiments are meant to be within the scope of the present disclosure and form different embodiments.

Those skilled in the art will appreciate that the description of each embodiment has its own emphasis. For the parts which are not described in detail in one embodiment, please refer to the relevant description of other embodiments.

Although the embodiments of the present disclosure have been described in conjunction with the accompanying drawings, those skilled in the art may make various modifications and variations without departing from the spirit and scope of the present disclosure, and such modifications and variations are within the scope defined by the appended claims.

## Claims

1. A song generation method, comprising:
acquiring a target lyric text input by a user;
aligning the target lyric text with a singing melody of an initial song, to determine correspondence between text units in the target lyric text and notes in the singing melody, wherein the singing melody is a singing melody of initial lyrics in the initial song;
performing voice synthesis on the target lyric text based on the correspondence between the text units in the target lyric text and the notes in the singing melody, to obtain a singing voice singing the target lyric text with the singing melody; and
combining the singing voice with an accompaniment audio of the initial song to generate a target song.

2. The song generation method according to claim 1, further comprising, before the aligning the target lyric text with the singing melody of an initial song:
selecting the initial song from a plurality of preset songs in response to a selection operation of the initial song; and
determining the singing melody and accompaniment audio corresponding to the initial song.

3. The song generation method according to any one of claims 1 to 2, wherein the aligning the target lyric text with the singing melody of an initial song comprises:
splitting the singing melody into a plurality of melody paragraphs;
splitting the target lyric text into a plurality of lyric paragraphs, wherein a number of the plurality of lyric paragraphs is the same as that of the plurality of melody paragraphs; and
aligning the plurality of lyric paragraphs with the plurality of melody paragraphs one to one, to determine correspondence between text units in the plurality of lyric paragraphs and notes in corresponding melody paragraphs.

4. The song generation method according to claim 3, wherein the splitting the singing melody into the plurality of melody paragraphs comprises:
determining a paragraph segmentation point every preset number of bars in the singing melody;
adjusting a number of paragraph segmentation points based on a number of notes in a melody paragraph corresponding to each segment segmentation point; and
adjusting a position of each paragraph segmentation point based on a distance between the note heads wherein the distance comprises a duration of a note head and/or a pitch interval of the note heads.

5. The song generation method according to claim 4, wherein the adjusting the number of paragraph segmentation points based on the number of notes in the melody paragraph corresponding to each segment segmentation point comprises:
for any paragraph segmentation point of the paragraph segmentation points, in case that a number of notes in a melody paragraph corresponding to the paragraph segmentation point is less than a first threshold, deleting the paragraph segmentation points; and
in case that a number of notes in the melody paragraph corresponding to the paragraph segmentation point is greater than a second threshold, adding a paragraph segmentation point.

6. The song generation method according to claim 4 or 5, wherein the adjusting the position of each paragraph segmentation point based on the distance comprises:
for any paragraph segmentation point of the paragraph segmentation points, searching a position where the distance between the note heads meets a preset condition within a preset number of beats around the paragraph segmentation points, as a position of the paragraph segmentation point; and
wherein the preset condition is a duration of a note head before the paragraph segmentation point or a duration of a note head after the paragraph segmentation point is the largest, or durations of note heads before and after the paragraph segmentation point are equal and a pitch interval of the note heads before and after the paragraph segmentation point is the largest.

7. The song generation method according to any one of claims 3 to 6, wherein the splitting the target lyric text into the plurality of lyric paragraphs comprises:
performing word segmentation on the target lyric text;
determining a part of speech corresponding to each word; and
splitting the target lyric text into the plurality of lyric paragraphs based on the part of speech corresponding to each word, a predefined linguistic rule and a length of the singing melody.

8. The song generation method according to claim 7, wherein the aligning the plurality of lyric paragraphs with the plurality of melody paragraphs one to one comprises:
for each melody paragraph of the plurality of melody paragraphs, acquiring a plurality of predetermined lyric alignment templates with different numbers of lyric words and corresponding to the melody paragraph;
selecting a target lyric alignment template from the plurality of lyric alignment templates, wherein a number of words corresponding to the target lyric alignment template is a number of words of a lyric paragraph corresponding to the melody paragraph; and
aligning the lyric paragraph corresponding to the melody paragraph with the melody paragraph based on the target lyric alignment template.

9. The song generation method according to claim 8, wherein the plurality of lyric alignment templates corresponding to the melody paragraph comprise a first lyric alignment template, a second lyric alignment template and a third lyric alignment template,
in the first lyric alignment template, each note in the melody paragraph corresponds to a text unit;
in the second lyric alignment template, adjacent notes with a closest distance between the note heads in the melody paragraph are combined into a note pair, wherein one note pair corresponds to one text unit; and
in the third lyric alignment template, adjacent notes with a closest distance between the note heads in the second lyric alignment template are combined into a note pair, wherein one note pair corresponds to one text unit.

10. The song generation method according to claim 7, wherein the aligning the plurality of lyric paragraphs with the plurality of melody paragraphs one to one comprises:
establishing correspondence between the plurality of lyric paragraphs and the plurality of melody paragraphs; and
corresponding text units in a lyric paragraph with notes in a melody paragraph having correspondence with the lyric paragraph.

11. The song generation method according to any one of claims 7 to 10, wherein:
the target lyric text is split into a plurality of lyric paragraphs based on a part of speech corresponding to each word and the predefined linguistic rule to make inseparable phrases located in a same lyric paragraph after splitting; and/or the target lyric text is split into the plurality of lyric paragraphs based on the length of the singing melody, to make a number of words in each of the plurality of lyric paragraphs less than or equal to a number of notes in a melody paragraph corresponding to the each of the plurality of lyric paragraph after splitting.

12. A song generation apparatus, comprising:
an acquisition unit configured to acquire a target lyric text input by a user;
an alignment unit configured to align the target lyric text with a singing melody of an initial song to determine correspondence between text units in the target lyric text and notes in the singing melody, wherein the singing melody is a singing melody of initial lyrics in the initial song;
a synthesis unit configured to perform voice synthesis on the target lyric text based on the correspondence between the text units in the target lyric text and the notes in the singing melody to obtain a singing voice singing the target lyric text with the singing melody; and
a generation unit configured to combine the singing voice with an accompaniment audio of the initial song to generate a target song.

13. A system comprising at least one computing device and at least one storage device storing instructions, wherein the instructions, when executed by the at least one computing device, cause the at least one computing device to perform the steps of the song generation method according to any one of claims 1 to 11.

14. A computer-readable storage medium, wherein the computer-readable storage medium stores a program or instructions which, when executed by at least one computing device, cause the at least one computing device to perform the steps of the song generation method according to any one of claims 1 to 11.

15. A computer program, comprising instructions which, when executed by a processor, cause the processor to perform the song generation method according to any one of claims 1 to 11.
